# EUROPEAN PATENT APPLICATION

(11) **EP 4 403 041 A1**
(43) Date of publication of application: **24.07.2024**
(21) Application number: 22866819.0
(22) Date of filing: 12.09.2022
(51) Int. Cl.: A23L 27/00, A22C 13/00, A23P 10/10, B65D 65/46

(54) **EDIBLE FILM-FORMING SOLUTION FOR TRANSFERRING SPICES, FILM AND METHOD OF OBTAINING SAME**

(30) Priority: 13.09.2021 ES 202130851
(71) Applicant: Viscofan, S.A., 31192 Tajonar (Navarra) (ES)
(72) Inventor: ROJAS GRAU, Maria Alejandra, 31192 TAJONAR (Navarra) (ES); FERON, Bernhard, 31192 TAJONAR (Navarra) (ES); ARRARAS ILUNDAIN, José Angel, 31192 TAJONAR (Navarra) (ES)
(74) Representative: Herrero & Asociados, S.L.
(86) International application number: PCT/ES2022/070572
(87) International publication number: WO 2023/037032

(57) **Abstract**

The present invention refers to a solution that forms an edible film, as well as the edible film capable of transferring spices of different weights, sizes and shapes to the surface of a food and completely disintegrating in contact with the humidity of the product where it is applied, leaving visible only the layer of spices contained in said film. It also refers to the procedure for obtaining it and the uses given to it.

## Description

The present invention refers to a solution that forms an edible film, as well as the edible film capable of transferring spices of different weights, sizes and shapes to the surface of a food and completely disintegrating in contact with the humidity of the product where it is applied, leaving only visible the layer of spices contained in said film. It also refers to the procedure for obtaining it and the uses given to it.

### Background of the invention

The use of edible films based on polysaccharides as a spice carrier is a previously known concept, as reflected, for example, in patents US2010055280A1, JPS52108058A. Both patents contemplate the possible use of methylcellulose and other polysaccharides for the formation of edible films. However, these patents do not take into consideration the sensory implications that the polysaccharides themselves have in the final product. The use of various polysaccharides or proteins with gelling properties, such as some cellulose, gums, gelatins or collagen, widely used for the production of this type of film, entails the formation of a layer with a gelatinous appearance on the surface of the food where it is applied. This layer appreciably reduces the sensory quality of the food, especially when the product is stored under refrigeration temperatures, a temperature at which the gelation of most of these components occurs.

The patents ES2349576T3, US2003044511A1, contemplate the possibility of using spices of different sizes, however, in no case are solutions proposed that allow solving the problem of working with spices of heterogeneous size or shapes, which is to obtain films with a uniform coverage and that In addition, the detachment of lighter particles is avoided. These applications also do not take into account the influence of the viscosity of methylcellulose on the correct formation of the film.

For all these reasons, the need to formulate an edible film based on polysaccharides capable of completely disintegrating in contact with the moisture of the food where it is applied is clear, disappearing and, therefore, avoiding the formation of gels on its surface.

### Description of the invention

The present invention describes edible film-forming solutions and polysaccharide-based edible films allowing the transfer of spices to food without the generation of an unwanted perceptible layer on the surface of the product where it is applied, which has been achieved thanks to the appropriate selection of the type and concentration of cellulose used, as well as its viscosity level.

The methylcellulose used in the preparation of the edible films of the present invention has been selected from the group of cellulose for its reversible gelation properties, that is, for its ability to dissolve in cold water, gel in the presence of heat, and become liquid again after cooling the product where it is incorporated. Surprisingly, this characteristic makes it ideal to be used as a structural ingredient of the edible films described in the present invention, since on the one hand the use of heat for its initial preparation is avoided, it solidifies quickly through the film drying process, and most importantly, once applied to the food product, it returns to its initial fluid condition, dissolving completely with the moisture of the food itself, and in an unexpected way. The use of a low viscosity methylcellulose (100-1000 cP) allows obtaining flexible and low thickness films, which contributes to a better dissolution of the edible film on the surface of the food where it is applied, thus avoiding the formation of perceptible layers (gelatinous appearance) on the final product.

The use of methylcellulose with very low viscosity (less than 100 cP) entails film formation problems, observing shrinkage of the solution and limiting its production. For its part, the use of high viscosity methylcellulose (greater than 1000cP) allows the formation of films, but with a greater thickness and lower elasticity, generating very noticeable layers of polysaccharides when it is applied to a food, even when it is ingredient is used in low concentrations.

The edible spice transfer films of the invention are obtained from a film-forming solution representing a first aspect of the invention.

Therefore, a first aspect of the invention relates to a film-forming solution comprising an aqueous dissolution of methylcellulose in a concentration by weight with respect to the total weight of the solution, between 0.5% and 6%, where methylcellulose has a viscosity between 100 cP and 1000 cP, measured in a solution at 2% by weight with respect to the total weight of the solution, using a Brookfield DV2T viscometer at 25°C with spindle No. 1, and with a rotational speed of 60 rpm.

From this forming solution and with the procedure explained below, the films of the invention are obtained.

Another aspect of the invention refers to an edible spice transfer film, characterized in that it comprises:
a) a layer comprising methylcellulose, with a viscosity between 100 cP and 1000 cP, measured in a 2% solution, by weight with respect to the total weight of the solution, using a Brookfield DV2T viscometer at 25°C with spindle No. 1, and with a rotational speed of 60 rpm, and
b) a layer of spices on or integrated into the layer comprising methylcellulose.

Another aspect of the invention refers to a process for obtaining edible film that includes the following steps:
a) dissolving methylcellulose in water until obtaining a solution, in a concentration by weight with respect to the total weight of the solution, between 0.5 and 6%, the methylcellulose has a viscosity between 100 cP and 1000 cP, measured in a 2% solution by weight with respect to the total weight of the solution, using a Brookfield DV2T viscometer at 25°C with spindle No. 1, and with a rotational speed of 60 rpm;
b) degassing the solution obtained in step a);
c) spreading the degassed solution obtained in step b) to form a uniform layer on a substrate;
e) drying the layer obtained in c)
f) separating the film from the substrate;
where the spices are added to the solution of step a) or to the layer obtained in step c), in a step d) of adding spices.

As it has been said, optionally after step c) there is a step d) of incorporating the spices, which are added in a cascade manner on the surface of the edible film when it is still wet. The amount of each spice added will depend on the final application of the edible film. Any type of spices with a homogeneous shape, weight and size can be added, whether in grain or pieces of grains, leaves, stems, powder, vegetable pieces, etc., including, among others, pepper, oregano, parsley, curry, basil, sweet or hot paprika, fine herbs, thyme, rosemary, chipotle, garlic, dehydrated vegetables, among others, also including spices considered "sweet", such as cinnamon, cardamom, anise, nutmeg, even small pieces of flowers or fruits dehydrated, etc., as well as flavorings depending on their final application. Likewise, as has been said in the case of the use of powdered spices, either to flavor or to impart color to the film, such as, for example, paprika or curry, these can be incorporated directly into the film-forming solution by means of an agitation process, eliminating a step in the system for obtaining it, standardizing its content in the film and allowing its complete transfer in the final product.

Another aspect of the invention refers to the edible film obtained by the process of the invention.

The application of the edible film of the invention to the food can be done either by direct contact with the side of the film that contains the spices, or by direct contact with the side of the film that contains only the polysaccharide layer.

Furthermore, the use of edible spice transfer films guarantees greater uniformity of the species on the surface of the food, minimizing the preparation and application times of these ingredients in a standard production process, also expanding the possibility of introducing different flavors into the line of production without having to do any intermediate cleaning process, thus saving time and effort.

Therefore, another aspect of the invention is the use of the edible film described in one of the aspects of the invention to transfer spices to a food.

In the present invention the term food refers to any type of fresh or processed meat, including beef, poultry, pork and lamb, fish and seafood, as well as dairy products, baked goods, sushi, vegan foods, as well as any other food that may contain some type of spice or flavoring.

Finally, it is another aspect of the invention, the foods comprising the film of the invention.

### Brief description of the drawings

Figure 1 shows a piece of ham on which formulation 4 according to example 1 has been applied.
Figure 2 shows an edible film containing a first layer of spices of greater weight and size and after the application of a second adherent polysaccharide layer to fix spices of lesser weight and size.

### Description of a preferred embodiment

As it has been said, a first aspect of the invention refers to a film-forming solution comprising an aqueous dissolution of methylcellulose in a concentration by weight with respect to the total weight of the solution, between 0.5% and 6%, and a viscosity between 100 cP and 1000 cP, measured in a solution at 2% by weight with respect to the total weight of the solution, using a Brookfield DV2T viscometer at 25°C with spindle No. 1, and with a rotational speed of 60 rpm. More preferably the viscosity is between 300 cP and 560 cP.

In a preferred embodiment, in addition to the structural polysaccharide, methylcellulose, other ingredients are also incorporated into the forming solution in order to improve the elasticity, strength, and adhesion properties of the edible film, using at least one other polysaccharide different from methylcellulose in a range between 0.1 % and 5% by weight with respect to the total weight of the solution.

The term polysaccharide refers to a polymer where the monomers are monosaccharides linked by glycosidic bonds. Preferably, they are selected from: alginate, pectin, gum arabic, xanthan gum, dextrin, starch and their combinations: alginate, pectin; alginate, gum arabic; alginate, xanthan gum; alginate, dextrin; alginate, starch; pectin, gum arabic; pectin, xanthan gum; pectin, dextrin; pectin, starch; arabic gum, xanthan gum; gum arabic, dextrin; gum arabic, starch; xanthan gum, dextrin; xanthan gum, starch; dextrin, starch; alginate, pectin, gum arabic; alginate, pectin, xanthan gum; alginate, pectin dextrin; alginate, pectin starch; alginate, gum arabic, xanthan gum, alginate, gum arabic, dextrin; alginate, gum arabic starch; alginate, xanthan gum, dextrin; alginate xanthan gum starch; alginate, dextrin, starch; pectin, gum arabic, xanthan gum; pectin gum arabic, dextrin; pectin, gum arabic starch; pectin, xanthan gum dextrin; pectin, xanthan gum starch; pectin, dextrin, starch; gum arabic, xanthan gum, dextrin; gum arabic, dextrin, starch; xanthan gum, dextrin, starch.

In order to improve the properties of elasticity, elongation and manageability of the resulting film, a plasticizing agent is preferably also incorporated.

Therefore, in another aspect of the forming solution it further comprises a plasticizing agent in a concentration by weight with respect to the total weight of the solution between 1% and 20%. More preferably the plasticizing agent is selected from: glycerin, sorbitol, or propylene glycol and their combinations: glycerin, sorbitol; glycerin, propylene glycol; sorbitol, propylene glycol; glycerin, sorbitol, propylene glycol.

In particular, the forming solution comprises methylcellulose in a concentration by weight with respect to the total weight between 2% and 3%, pectin between 0.5% and 1%, alginate between 0.1 and 1% and glycerol of the 2% to 3%.

A second aspect of the invention refers to an edible film, characterized in that it comprises:
a layer comprising methylcellulose with a viscosity between 100 cP and 1000 cP, measured in a 2% solution by weight with respect to the total weight of the solution, using a Brookfield DV2T viscometer at 25°C with spindle No. 1, and with a rotational speed 60 rpm, and
a layer of spices on or integrated into the layer comprising methylcellulose.

In a preferred embodiment, the viscosity is between 300 cP and 560 cP.

In a preferred embodiment, the film in the layer comprising methylcellulose also comprises another polysaccharide other than methylcellulose. More preferably, the polysaccharide is selected from: alginate, pectin, gum arabic, xanthan gum, dextrin, starch, as well as combinations thereof as defined above in this description. More preferably this layer comprises a plasticizer. Even more preferably the plasticizer is selected from: glycerin, sorbitol, or propylene glycol and their combinations: glycerin, sorbitol; glycerin, propylene glycol; sorbitol, propylene glycol; glycerin, sorbitol, propylene glycol.

On the other hand, when spices composed of a mixture of ingredients of different sizes, weights and/or granulometry (powders, grains, seeds, leaves, etc.) are used, a technical difficulty is generated due to a lack of homogeneity on the surface of the film caused by the different levels of adhesion of the components of the spice mixture. This is mainly due to the fact that heavier particles, such as pieces of pepper, cover the surface of the edible film more quickly when they are applied in a cascade manner on the edible film. This fact reduces the area necessary so that the lighter particles, such as the leaves of some aromatic herbs, can remain adhered in the same proportion as the rest of the heavier ingredients included in said spice mixture. This problem, in addition to generating less uniformity of the final product, also generates greater detachment of these lighter particles during subsequent handling of the film since they are not completely adhered to the surface of the film. In those cases where spices of homogeneous weight, shape and size are used individually, but with a tendency to come off easily during handling (especially leaves), a layer of adherent polysaccharides can be applied over the layer of spices once distributed on the surface of the film still wet. In this way, the fixation of spices in films composed of a single layer of polysaccharides is improved.

Therefore, these problems are solved with a second layer of polysaccharides, this second layer is formed by a polysaccharide solution composed of at least one ingredient with adhesive capacity within the group of: dextrin, starch, rubber, cellulose, among others, or combination of these such as: dextrin, starch; dextrin cellulose gums; starch, cellulose gum; dextrin, starch and cellulose gum, in concentrations between 0.1 and 10% by weight with respect to the total weight of the solution. Therefore, preferably the edible film also comprises a layer of polysaccharides with adhesive capacity on the layer of spices or on the layer of methylcellulose that integrates the spices.

Finally, the edible film described in the present invention has a low water activity, less than 0.5, preferably between 0.1 and 0.5, allowing its use and storage safely for a long period of time, also minimizing the microbiological risks of cross contamination that some current methodologies for applying spices in food products entail.

The combined use of methylcellulose with the rest of the ingredients produces a synergistic effect between them, allowing an edible film to be obtained that is resistant to dry handling, completely soluble with the moisture of the food itself and with good adhesion properties to the food product, both of the spices and the film, dissolving completely on the surface of the product where it is applied, regardless of whether it is made up of one or several layers.

The thickness of the film resulting from a single layer of polysaccharides, without spices, is preferably between 30 and 160 microns. For its part, the thickness of the resulting film containing the spices is between 100 and 1500 microns, depending on the type and quantity of spices used in its preparation, as well as the presence of a double layer of polysaccharides. In order to obtain different microns, various parameters can be adjusted such as the opening of the dosing system, the speed of the line, as well as the viscosity of the solution.

As has been said, another aspect of the invention refers to a process for obtaining edible film consisting of the following steps:
a) dissolving methylcellulose in water until obtaining a solution, in a concentration by weight with respect to the total weight of the solution, between 0.5% and 6%, the methylcellulose has a viscosity between 100 cP and 1000 cP, measured in a solution at 2% by weight with respect to the total weight of the solution, using a Brookfield DV2T viscometer at 25°C with spindle No. 1, and with a rotational speed of 60 rpm;
b) degassing the solution obtained in step a);
c) spreading the degassed solution obtained in step b) to form a uniform layer on a substrate;
e) drying the layer obtained in c)
f) separating the film from the substrate
where the spices are added to the solution of step a) or to the layer obtained in step c), in a step d) of adding spices.

Preferably step b) of degassing is carried out by subjecting the solution to a vacuum pressure greater than 0.6 bar, with continuous stirring and for at least 1 hour, or until the air bubbles have completely disappeared.

Preferably the substrate of step c) is selected from: plastic, silicone paper, teflon. Preferably this step is carried out with a blade system or through the slot-die system.

Preferably, drying step e) is a convection and/or infrared drying process, at a temperature between 50 and 150°C for a period of time between 1 and 10 minutes.

Preferably, once the film is completely dry, it is automatically separated from the substrate and converted into coils composed solely of the edible film, which can subsequently be transformed into different shapes and sizes depending on the food where it is intended to be applied. In another embodiment, it is also possible to obtain coils composed of the edible film still supported by the plastic or paper substrate used for its deposition, which can subsequently be transformed into different shapes or sizes.

Preferably, the procedure comprises a step of preparing an adherent solution, preferably an aqueous solution, which comprises at least one of the following polysaccharides: dextrins, starches, gums, cellulose, in a concentration by weight with respect to the total weight of the adherent solution comprised between 0.5% and 6%; a step of spraying this solution on the first layer of spices applied in d) or on the layer obtained in c) if the spices have been added in step a) to obtain an adherent polysaccharide layer and more preferably an application of a second layer of spices on the adherent polysaccharide layer.

Below are two examples of making and applying edible films, which in no way limit the scope of the invention.

### EXAMPLES

The ingredients used by the inventors to carry out the following tests are detailed below:
Methylcellulose (MC): Cellulose ester, METHOCEL^{™} A4C, A4M, A15, and WELLENCE^{™} Smart Fry 60, The Dow Chemical Company, Michigan, USA.
Alginate: Sodium alginate, Viscarin^{®} GP21, Dupont Nutrition Ireland, Cork, Ireland.
Pectin: Low-methoxylation pectin, UnipectineTM OF-100, Cargill France SAS, Redon, France.
Corn starch: Pregelatinized corn starch, Quemina 21.214, Agrana Starke GmbH, Aschach, Austria.
Gum arabic: Gum arabic/acacia, Spray dried gum acacia 396A, Alland & Robert, Paris, France.
Glycerol: Glycerol, Wilfarin USP-997, Wilmar Europe Trading BV, Rotterdam, Netherland.

### Example 1. Comparative example of edible films made with methylcellulose of different viscosity ranges and their application in pieces of turkey ham.

Firstly, the different film-forming solutions were prepared. In all cases, the formulation was composed of an aqueous solution of MC at 2.5% w/wₛₒₗᵤₜᵢₒₙ, pectin at 1% w/wₛₒₗᵤₜᵢₒₙ, alginate at 1% w/wₛₒₗᵤₜᵢₒₙ and glycerol at 3% w/wₛₒₗᵤₜᵢₒₙ, which was obtained by dispersing said ingredients in water and subsequent degassing. The different viscosity levels present in the MC are detailed in Table 1.

Once the mixtures were obtained, they were spread on silicone paper using a modular blade system that made it possible to define the initial thickness of the still wet film and, in this way, calculate the expected thickness of the dry film. Once the solution was deposited on the paper (300 µm), it was subjected to a continuous drying process, consisting of infrared and hot air at a temperature of 120°C for 3 minutes. Once dry, the film was separated from the paper and was subsequently evaluated comparatively, as detailed below:

**Table 1. Comparison of the characteristics of the different films. Examples 1 and 2 and 4 are not examples of the invention, they are comparative examples.**

| Formulati on | MC Type | Viscosi ty Viscosi ty (cp) at 2% | Film extension | | Thic knes s (µm) | Mechanical properties | |
|---|---|---|---|---|---|---|---|
| | | | Retractio n | Film formatio n | | Breakag e (N) | Elongatio n (%) |
| 1 | Very low viscosit y (A15) | 15-18 | Yes | No | - | - | - |
| 2 | Very low viscosit y (WELL) | 50-80 | Yes | Yes, but very fragile | 40-50 | 1.28 | 6.49 |
| 3 | Low viscosit y (A4C) | 300-560 | No | Yes | 50-55 | 2.88 | 14.14 |
| 4 | High viscosit y (A4M) | 3500-5600 | No | Yes | 90-95 | 3.89 | 10.89 |

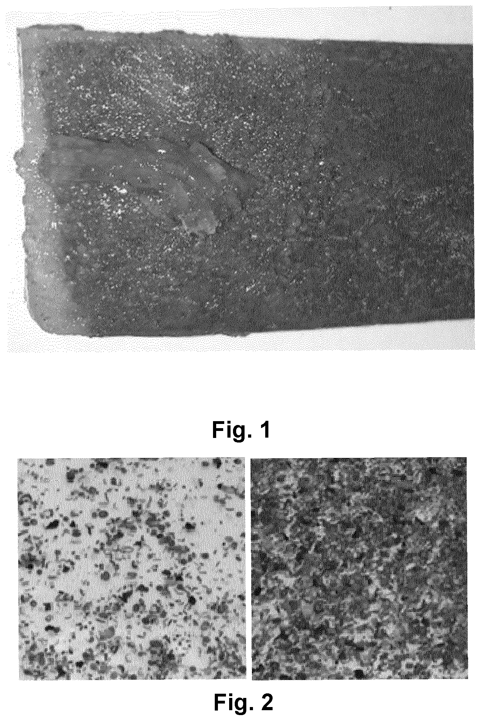

The results included in Table 1 clearly show the effect of viscosity on the formation of the film, as well as on its mechanical properties. The formation of film from very low viscosity MC (formulations 1 and 2) made the formation of resistant films difficult, limiting their manageability. For its part, using high viscosity MC (formulation 4) generated films with greater resistance to breakage, but at the same time with greater thickness. In order to evaluate the effect that the films obtained could have on the sensory characteristics of the final product, a comparative test was carried out on the application of said films made with MC of different viscosities. For this test, red paprika powder was used, which was applied only in those formulations capable of consistently forming a film (formulations 3 and 4). To do this, once the film-forming solution was deposited on the paper, the red paprika powder was dropped in a cascade manner on the still wet surface, incorporating in this case 60 g/m2 of the spice. Next, the wet film already containing the spice was subjected to a continuous drying process, consisting of infrared and hot air, in this case it was necessary to use a temperature of 130°C and 3 minutes to obtain a completely dry film, obtaining a micron end of the 150 µm film. Once dry, the different films were separated from the paper and applied to pieces of turkey ham. To do this, the side of the film containing the layer of sweet paprika was placed directly in contact with the surface of the turkey ham, completely covering its surface and subsequently being vacuum packed. The pieces of ham covered with the different films were stored in the refrigerator (4-6°C) for 7 days. After this period of time, the film samples were already completely dissolved on the surface of the ham, observing an appreciable gelatinous layer on those samples coated with the edible film of formulation 4 (3500-5600cP) (as shown in Figure 1), whose main difference with formulation 3 was its low degree of viscosity (300-560cP).

### Example 2.- Preparation of films with a bilayer of polysaccharides, containing spices of heterogeneous size and shape.

For this, two solutions were prepared, first, an aqueous solution composed of MC A4C at 5.5% w/wₛₒₗᵤₜᵢₒₙ, corn starch at 2% w/wₛₒₗᵤₜᵢₒₙ and glycerol at 2% w/wₛₒₗᵤₜᵢₒₙ (mixture 1), the which was obtained by dispersing all these ingredients in water and subsequently degassing the solution. Subsequently, a second polysaccharide solution with adhesive capacity was prepared (mixture 2), in this case composed of an aqueous solution of gum arabic at 0.5% by weight, which was also degassed before use.

Once the solutions were prepared, mixture 1 was spread on silicone paper using a modular blade system. In this case, pastrami was used because it is a mixture of heterogeneous spices, containing larger pieces (chopped peppercorns, coriander seeds, chili pieces) and lighter particles made up of coriander leaves. Therefore, once the solution of mixture 1 was deposited on the paper, the larger particles of the pastrami were allowed to fall in a cascade manner on the still wet surface, incorporating in this case 30 g/m2 of spice. Next, mixture 2 was applied as a spray on the first layer of spices, allowing the formation of a 40 µm layer of polysaccharides. Immediately afterwards, the coriander leaves were applied, allowing the latter to fall in a cascade on the still wet surface of the film, incorporating in this case 30 g/m2 of the coriander leaves.

Finally, the wet film already containing the spices was subjected to a continuous drying process composed of infrared and hot air, with 140°C and 4 minutes being necessary to obtain a completely dry film, obtaining a final film micron size of 220 µm containing the spices.

## Claims

1. Film-forming solution comprising an aqueous dissolution of methylcellulose in a concentration by weight with respect to the total weight of the solution between 0.5% and 6%, where the methylcellulose has a viscosity between 100 cP and 1000 cP, measured in a solution at 2% by weight with respect to the total weight of the solution, using a Brookfield DV2T viscometer at 25°C with spindle No. 1, and with a rotational speed of 60 rpm.

2. Film-forming solution according to claim 1 **characterized in that** it also comprises a polysaccharide different from methylcellulose in a range between 0.1% and 5% by weight with respect to the total weight of the solution.

3. Film-forming solution according to claim 2 **characterized in that** the polysaccharide is selected from: alginate, pectin, gum arabic, xanthan gum, dextrin, starch and their combinations.

4. Film-forming solution according to any of claims 1 to 3, **characterized in that** it also comprises a plasticizing agent in a concentration between 1% and 20% by weight with respect to the total weight of the solution.

5. Film-forming solution according to claim 4 **characterized in that** the plasticizing agent is selected from: glycerin, sorbitol, or propylene glycol and their combinations.

6. Film-forming solution according to any of claims 1 to 5 **characterized in that** the methylcellulose has a viscosity between 300 cP and 560 cP, measured in a solution at 2% by weight with respect to the total weight of the solution, using a Brookfield DV2T viscometer at 25°C with spindle N°1, and with a rotational speed of 60 rpm.

7. Edible spice transfer film, **characterized in that** it comprises:
a) a layer comprising methylcellulose, soluble in water, with a viscosity between 100 cP and 1000 cP, measured in a 2% solution by weight with respect to the total weight of the solution, using a Brookfield DV2T viscometer at 25°C with the spindle No. 1, and with a rotational speed of 60 rpm, and
b) a layer of spices on or integrated into the layer comprising methylcellulose.

8. Edible film according to claim 7, **characterized in that** the viscosity is between 300 cP - 560 cP.

9. Edible film according to any of claims 7 or 8 **characterized in that** the layer comprising methylcellulose also comprises a polysaccharide different from methylcellulose.

10. Edible film according to claim 9 **characterized in that** the polysaccharide is selected from: alginate, pectin, gum arabic, xanthan gum, dextrin, starch and their combinations.

11. Edible film according to any of claims 7 to 10 **characterized in that** the layer comprising methylcellulose also comprises a plasticizing agent.

12. Edible film according to claim 11 **characterized in that** the plasticizing agent is selected from: glycerin, sorbitol, or propylene glycol and their combinations.

13. Edible film according to any of claims 7 to 12, **characterized in that** it comprises a second layer of polysaccharides c) on the layer of spices b) or on the layer of methylcellulose that integrates the spices a) where the polysaccharides are polysaccharides with adhesive capacity.

14. Edible film according to claim 13 **characterized in that** the polysaccharide with adhesive capacity is selected from: dextrin, starch, gum or a combination of these such as: dextrin, starch; dextrin cellulose gums; starch, cellulose gum; dextrin, starch and cellulose gum.

15. Edible film according to claim 13 or 14 **characterized in that** on layer c) there is a layer of spices.

16. Edible film according to any of claims 7 to 15 **characterized in that** it has a water activity between 0.1 and 0.5.

17. Edible film according to any of claims 7 to 16 **characterized in that** the thickness of the film is between 100 and 1500 microns.

18. Procedure for obtaining the edible film comprising the following steps:
a) dissolving methylcellulose in water, in a concentration between 0.5 and 6% by weight with respect to the total weight of the solution, methylcellulose has a viscosity between 100 cP and 1000 cP, measured in a 2% solution, using a Brookfield DV2T viscometer at 25°C with spindle N°1, and with a rotational speed of 60 rpm;
b) degassing the solution obtained in step a);
c) spreading the degassed solution obtained in step b) to form a uniform layer on a substrate;
e) drying the layer obtained in c)
f) separating the film from the substrate;
where the spices are added to the solution of step a) or to the layer obtained in step c) in a step d) of adding spices.

19. Procedure according to claim 18 **characterized in that** in step a) a second polysaccharide different from methylcellulose is dissolved in a concentration between 0.1 and 5% by weight and a plasticizing agent, in a concentration between 1 and 20% by weight.

20. Procedure according to any of claims 18 or 19 **characterized in that** it also comprises a step of preparation of an adherent solution comprising at least one of the following polysaccharides: dextrins, starches, gums, cellulose, in a concentration between 0.5 and 6% by weight, a step of spraying this solution on the first layer of spices applied in d) or on the layer obtained in c) if the spices have been added in step a) to obtain an adherent polysaccharide layer and application of a second layer of spices on the adherent polysaccharide layer.

21. Use of the edible spice transfer film according to any of claims 7 to 17 to transfer spices to a food.

22. Food comprising the film defined according to any of claims 7 to 17.
